# DEMANDE DE BREVET EUROPEEN

(11) **EP 0 755 833 A1**
(43) Date de publication de la demande: **29.01.1997**
(21) Numéro de dépôt: 96401404.7
(22) Date de dépôt: 25.06.1996
(51) Int. Cl.: B60S 1/34

(54) **Essuie-glace de véhicule automobile muni de moyens de limitation du soulèvement du bras d'essuie-glace**

(30) Priorité: 28.06.1995 FR 9507885
(71) Demandeur: VALEO SYSTEMES D'ESSUYAGE, 78321 La Verrière (FR)
(72) Inventeur: Vacher, Pascal, 63500 Issoire (FR)
(74) Mandataire: Gamonal, Didier

(57) **Abrégé**

L'invention concerne un essuie-glace de véhicule automobile, du type dans lequel un bras d'essuie-glace (10), qui s'étend longitudinalement en regard d'une vitre à essuyer et qui porte un balai d'essuie-glace, est articulé sur une tête d'entraînement (14) par une extrémité d'articulation (12), autour d'un axe transver- sal (A2) sensiblement parallèle au plan de la vitre, pour permettre le soulèvement du bras (10) depuis une position de fonctionnement dans laquelle le balai est plaqué contre la vitre et vers laquelle il est sollicité élastiquement, vers une position soulevée dans laquelle le balai (10) est décollé de la vitre, caractérisé en ce que la tête d'entraînement (14) et l'extrémité d'articu- lation (12) du bras (10) comporte des surfaces de butées complémentaires (44, 50) qui coopèrent pour limiter l'angle de soulèvement du bras (10).

## Description

L'invention concerne un essuie-glace de véhicule automobile.

L'invention concerne plus particulièrement un essuie-glace de véhicule automobile, du type dans lequel un bras d'essuie-glace, qui s'étend longitudinalement en regard d'une vitre à essuyer et qui porte un balai d'essuie-glace, est articulé sur une tête d'entraînement par une extrémité d'articulation, autour d'un axe transversal sensiblement parallèle au plan de la vitre, pour permettre le soulèvement du bras depuis une position de fonctionnement dans lequel le balai est plaqué contre la vitre et vers laquelle il est sollicité élastiquement, vers une position soulevée dans laquelle le balai est décollé de la vitre.

On connaît de tels essuie-glace qui permettent notamment un remplacement aisé du balai d'essuie-glace lorsque celui-ci est usé.

Toutefois, entre la dépose de l'ancien balai et la pose du nouveau, l'extrémité libre du bras d'essuie-glace qui porte le balai est alors susceptible de venir en contact avec la vitre à essuyer sous l'effet du ressort de pression d'essuyage qui tend à plaquer l'essuie-glace contre la vitre.

Ainsi, si le bras d'essuie-glace est malencontreusement lâché depuis une position angulaire très éloignée de la vitre, la vitesse qu'il acquiert sous l'effet du ressort entraîne un choc violent de l'extrémité libre du bras d'essuie-glace contre la vitre et risque de provoquer le bris de la vitre.

C'est dans le but de résoudre ce problème que l'invention propose un essuie-glace du type vu précédemment, caractérisé en ce que la tête d'entraînement et l'extrémité d'articulation du bras comportent des surfaces de butée complémentaires qui coopèrent pour limiter l'angle de débattement du bras.

Selon d'autres caractéristiques de l'invention :
- les surfaces de butée sont chacune sensiblement contenues dans des plans passant par l'axe d'articulation du bras sur la tête ;
- la tête d'entraînement comporte une extrémité d'accrochage du bras qui délimite deux décrochements transversaux et qui est reçue entre deux flancs parallèles formant l'extrémité d'articulation du bras, et les surfaces de butée de la tête et du bras sont formées respectivement sur au moins un décrochement transversal de la tête et sur le flanc adjacent de l'extrémité d'articulation du bras ;
- les surfaces de butée de la tête d'entraînement sont réalisées venues de matière par moulage ;
- les surfaces de butée du bras sont réalisées venues de matière avec le bras ;
- il est prévu au moins une autre paire de surfaces de butée complémentaires qui limitent la course angulaire du bras autour de la tête selon le sens opposé au débattement du bras limité par les butées.

D'autres caractéristiques et avantages de l'invention apparaîtront à la lecture de la description détaillée qui suit pour la compréhension de laquelle on se reportera aux dessins annexés dans lesquels :
- La figure 1 est une vue partielle en perspective éclatée des principaux composants d'un essuie-glace conforme aux enseignements de l'invention;
- la figure 2 est une vue latérale partielle d'un essuie-glace selon l'invention représenté en position de fonctionnement ;
- la figure 3 est une vue similaire à celle de la figure 2 sur laquelle l'essuie-glace est représenté en position soulevée.

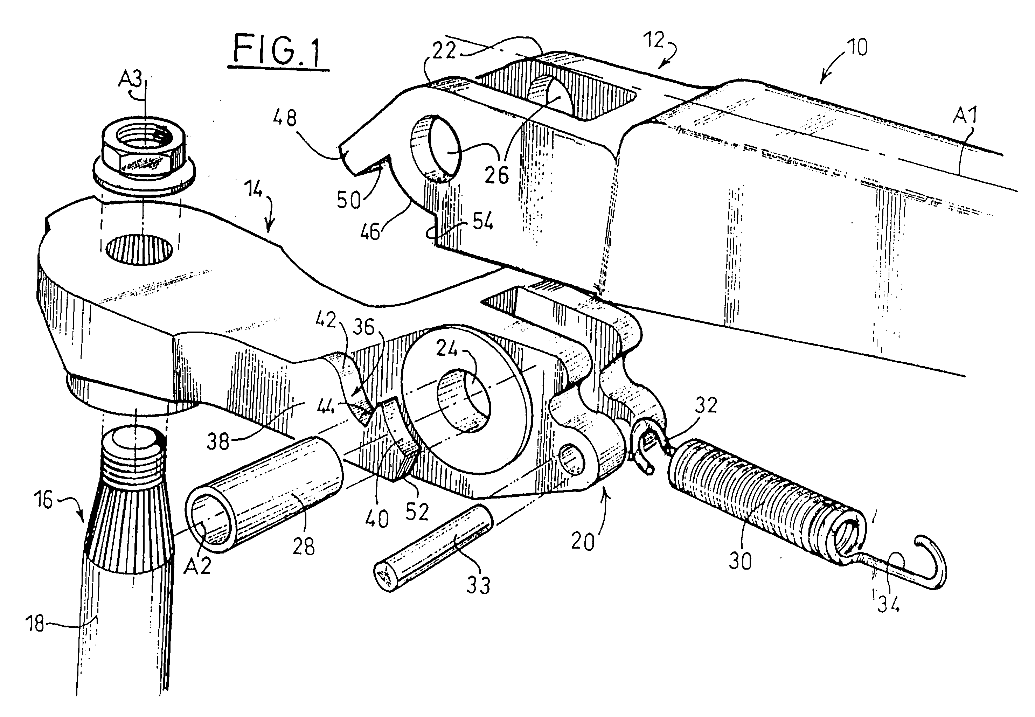

On a représenté sur la figure 1 un bras d'essuie-glace 10 de direction longitudinale générale A1 sensiblement parallèle au plan d'une vitre à essuyer (non représentée) d'un véhicule automobile.

Le bras d'essuie-glace 10 comporte une extrémité longitudinale 12 d'articulation du bras 10 sur une tête d'entraînement 14.

Le bras 10 est articulé sur la tête 14 autour d'un axe A2 sensiblement perpendiculaire à la direction générale A1 du bras 10 et sensiblement parallèle au plan de la vitre.

La tête d'entraînement 14 est elle-même montée sur l'extrémité libre 16 d'un arbre 18 d'entraînement en balayage alterné, d'axe A3 sensiblement perpendiculaire au plan de la vitre.

La tête d'entraînement 14 comporte une extrémité 20 d'accrochage du bras 10 qui est de largeur transversale réduite, selon une direction parallèle à l'axe A2 d'articulation du bras 10 sur la tête 14, et qui est reçue entre deux flancs parallèles 22, perpendiculaires à l'axe A2 d'articulation, qui forment l'extrémité d'articulation 12 du bras 10.

L'extrémité d'accrochage 20 de la tête d'entraînement 14 et les deux flancs 22 de l'extrémité d'articulation 12 du bras 10 sont munis chacun respectivement de perçages 24, 26 d'axe A2 destinés à recevoir, lorsqu'ils sont agencés en vis-à-vis l'un de l'autre, une tige d'articulation 28.

De manière connue, un ressort hélicoïdal 30, ici de traction, est accroché par une première extrémité 32 sur une tige 33 de la tête d'entraînement 14 et par une seconde extrémité opposée 34 sur le bras d'essuie-glace 10 de manière à solliciter élastiquement le bras 10 en direction de la vitre à essuyer.

Le bras d'essuie-glace est ainsi susceptible d'appliquer à un balai d'essuie-glace (non représenté) agencé à l'extrémité libre (non représentée) du bras 10 une pression d'essuyage qui le sollicite en appui contre la vitre.

Conformément aux enseignements de l'invention, l'essuie-glace est muni de moyens qui permettent de limiter l'angle de soulèvement du bras par rapport à la vitre.

L'extrémité d'accrochage 20 de la tête d'entraînement 14, qui est de largeur transversale réduite, délimite de part et d'autre des décrochements transversaux 36 dans les flancs latéraux 38 de la tête 14.

Les décrochements transversaux 36 sont délimités par deux éléments de surface 40, 42 sensiblement cylindriques concaves d'axe A2 dont les rayons respectifs R1, R2 sont différents.

Les deux éléments de surfaces cylindriques 40, 42 sont raccordés par un élément de surface plan 44 qui est agencé sensiblement radialement par rapport à l'axe d'articulation A2 du bras 10 sur la tête 14.

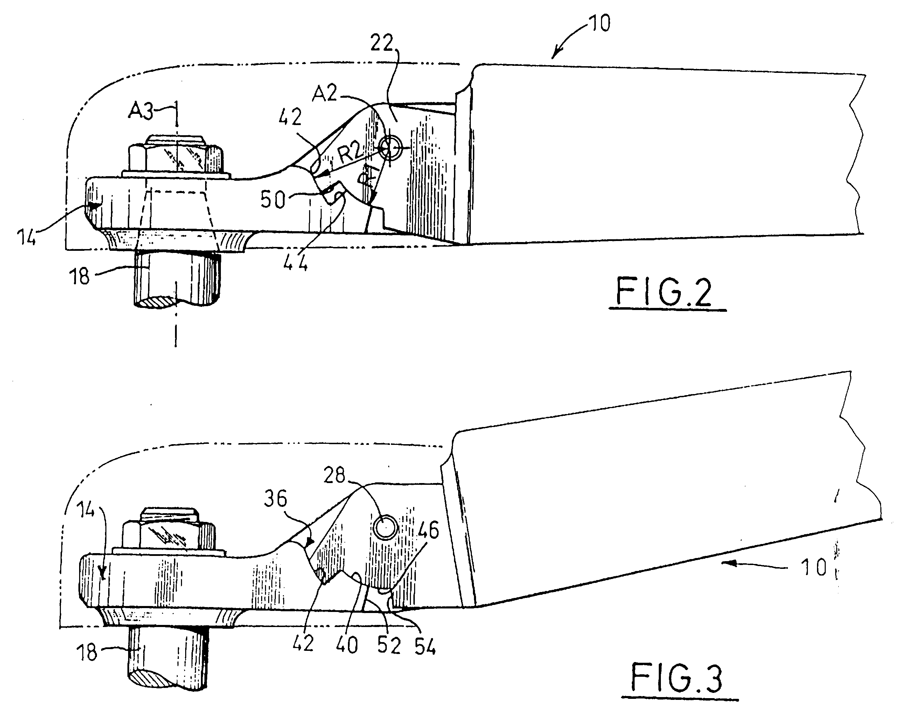

Comme on peut le voir plus particulièrement sur les figures 2 et 3, les flancs 22 de l'extrémité d'articulation 12 du bras 10 comportent chacun une portion 46 en arc-de-cercle centrée sur l'axe A2 et dont le rayon est sensiblement équivalent au plus petit rayon R1 de la surface cylindrique 40 de plus petit rayon de la tête d'entraînement 14.

Cette portion en arc-de-cercle 46 permet donc une libre rotation du bras 10 autour de l'axe A2.

Les flancs transversaux 22 sont également munis chacun d'un ergot radial 48 qui est destiné à venir en regard de la surface cylindrique 42 de rayon R2 de la tête d'entraînement 14.

Le raccordement des ergots 48 et de la portion en arc-de-cercle 46 des flancs 22 délimitent ainsi sur les chants des flancs 22 une surface de butée 50, agencée dans un plan sensiblement radial par rapport à l'axe d'articulation A2, et qui est susceptible de coopérer avec l'élément de surface plan 44 qui constitue une surface de butée agencée sur les décrochements transversaux 36 de la tête 14.

L'agencement en vis-à-vis des surfaces de butées 44, 50 de la tête d'entraînement 14 et du bras 10 dans un plan radial par rapport à leur axe d'articulation A2 permet d'éviter tout risque de coincement.

De manière connue, la tête d'entraînement 14 est réalisée par moulage il est donc très facile de réaliser les décrochements transversaux 36 venus de matière avec la tête 14.

De même, la portion en arc-de-cercle 36 et l'ergot 48 des flancs 22 de l'extrémité d'articulation 12 du bras 10 peuvent être réalisés venus de matière par moulage ou par découpe et pliage.

Selon un aspect complémentaire de l'invention, et comme on peut le voir sur les figures, il est possible de prévoir des surfaces de butées complémentaires qui permettent de limiter selon le même principe l'angle de rotation du bras 10 par rapport à la tête 14 selon le sens opposé au sens de soulèvement.

Cette disposition est particulièrement avantageuse, notamment pour le montage de l'essuie-glace sur le véhicule.

En effet, pour monter facilement la tête d'entraînement 14 sur l'arbre d'entraînement 18 on a intérêt que le bras 10 soit agencé par rapport à la tête 14, selon une direction proche de la direction longitudinale A1 qu'il occupe en fonctionnement.

A cet effet, il est prévu une seconde surface plane 52 sensiblement radiale sur chaque décrochement transversal 36 et qui prolonge la surface cylindrique 42 de plus petit rayon R1, du côté opposé à l'élément plan 44 de jonction avec l'élément de surface cylindrique de plus grand rayon R2.

De la même manière, une surface de butée 54 complémentaire est agencée radialement à l'extrémité opposée à la surface de butée 50 de la portion en arc-de-cercle 46 de chaque flanc 22 de l'extrémité d'articulation 12 du bras 10.

On réalise ainsi de manière simple et économique une limitation de la course angulaire du bras par rapport à la tête selon les deux directions opposées en rotation autour de l'axe A2 grâce à deux paires de surfaces de butée complémentaires 44, 50 et 52, 54.

Comme on peut le voir sur la figure 3, les surfaces de butée complémentaires 44, 50 de la tête 14 et des bras 10 coopèrent pour limiter à une quinzaine de degrés l'angle de soulèvement du bras 10.

Selon la direction opposée, la limitation de course peut être notamment utile lors de l'arrivée en position de parking de l'essuie-glace si l'on prévoit que celle-ci se fait dans une zone angulaire qui permet au bras de venir en butée sur la tête afin de soulager la pression d'appui du balai d'essuie-glace contre la vitre, ou contre une partie de la carrosserie, et ainsi d'éviter de déformer la raclette d'essuyage du balai.

## Revendications

1. Essuie-glace de véhicule automobile, du type dans lequel un bras d'essuie-glace (10), qui s'étend longitudinalement en regard d'une vitre à essuyer et qui porte un balai d'essuie-glace, est articulé sur une tête d'entraînement (14) par une extrémité d'articulation (12), autour d'un axe transversal (A2) sensiblement parallèle au plan de la vitre, pour permettre le soulèvement du bras (10) depuis une position de fonctionnement dans laquelle le balai est plaqué contre la vitre et vers laquelle il est sollicité élastiquement, vers une position soulevée dans laquelle le balai (10) est décollé de la vitre, caractérisé en ce que la tête d'entraînement (14) et l'extrémité d'articulation (12) du bras (10) comportent au moins une paire de surfaces de butée complémentaires (44, 50) qui coopèrent pour limiter l'angle de débattement du bras (10).

2. Essuie-glace selon la revendication 1, caractérisé en ce que les surfaces de butée (44, 50) sont chacune sensiblement contenues dans des plans passant par l'axe (A2) d'articulation du bras (10) sur la tête (14).

3. Essuie-glace selon la revendication 2, caractérisé en ce que la tête d'entraînement (14) comporte une extrémité d'accrochage (20) du bras (10), qui délimite deux décrochements transversaux (36) et qui est reçue entre deux flancs parallèles (22) formant l'extrémité d'articulation (12) du bras (10), et en ce que les surfaces de butée (44, 50) de la tête (14) et du bras (10) sont formées respectivement sur au moins un décrochement transversal (36) de la tête (14) et sur le flanc (22) adjacent de l'extrémité d'articulation (12) du bras (10).

4. Essuie-glace selon l'une quelconques des revendications précédentes, caractérisé en ce qu'il est prévu au moins une autre paire de surfaces de butée complémentaires (52, 54) qui limitent la course angulaire du bras (10) autour de la tête (14) selon le sens opposé au débattement du bras (10) limité par les butées (44,50).

5. Essuie-glace selon l'une des revendications 1 à 4, caractérisé en ce que les surfaces de butée (44,52) de la tête d'entraînement sont réalisées venues de matière avec la tête (14).

6. Essuie-glace selon la revendication 5, caractérisé en ce que les surfaces de butée (44) sont réalisées par moulage avec la tête d'entraînement (14).

7. Essuie-glace selon l'une des revendications 1 à 6, caractérisé en ce que les surfaces de butée (50,54) du bras (10) sont réalisées venues de matière avec le bras (10).
